# EUROPÄISCHE PATENTSCHRIFT

(11) **EP 1 943 089 B1**
(45) Veröffentlichungstag und Bekanntmachung des Hinweises auf die Patenterteilung: **15.04.2009**
(21) Anmeldenummer: 06791951.4
(22) Anmeldetag: 09.09.2006
(51) Int. Cl.: B29D 30/16, B29D 30/30

(54) **VORRICHTUNG ZUM ZUFÜHREN UND ANDRÜCKEN VON KAUTSCHUKMATERIAL ZUM AUFBAU EINER REIFENAUFBAUSCHICHT**
DEVICE FOR GUIDING AND PRESSING RUBBER FOR CONSTRUCTING A TYRE CONSTRUCTION LAYER
DISPOSITIF D'ACHEMINEMENT ET DE PRESSAGE DE CAOUTCHOUC POUR CONSTRUIRE UNE COUCHE DE CONSTRUCTION DE PNEU

(30) Priorität: 27.09.2005 DE 102005046115
(43) Veröffentlichungstag der Anmeldung: 16.07.2008
(73) Patentinhaber: Continental Aktiengesellschaft, D-30165 Hannover (DE)
(72) Erfinder: GEFFERT, Ulrich, 31848 Bad Münder (DE); KASTENS, Sven, 30890 Barsingshausen (DE)
(74) Vertreter: Finger, Karsten
(86) Internationale Anmeldenummer: PCT/EP2006/008802
(87) Internationale Veröffentlichungsnummer: WO 2007/036294

(56) Entgegenhaltungen:
- EP-A1- 1 094 930
- EP-A2- 0 719 633
- WO-A-03/091009
- JP-A- 10 067 055
- JP-A- 2001 105 509
- US-A1- 2003 051 794
- US-A1- 2005 161 163

## Beschreibung

Die Erfindung betrifft eine Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper, mit einem Gestell gemäß dem Oberbegriff des Patentanspruchs 1.

Eine Vorrichtung dieser Art ist beispielsweise aus der JP-A-10-067 055 bekannt.

Aus der EP1094930B1 ist es bekannt, ein extrudiertes Rundschnurkautschukmaterial kontinuierlich in einem Spulkopf einem Kalander zur Ausformung zuzuführen und das ausgeformte, streifenförmige Kautschukmaterial über eine Andrückrolle auf einen auf einem Zapfen aufgebauten Reifenrohling zur Ausformung einer Seitenwand schraubenförmig aufzuspulen. Das Kautschukmaterial wird bei Anwendung eines solchen Verfahrens entsprechend der gewünschten Länge des aufzuspulenden Streifens abgelängt. Mittels der Andrückrolle kann der auf dem Zapfen aufgebaute Rohling von der zum Zapfenende hin freien unbebauten Zapfenseite auch die Seitenwand des Reifenrohlings wegen der guten Zugänglichkeit sicher mit Kautschukmaterial belegen. Zum Bespulen der anderen Seitenwand über deren gesamten Erstreckungsbereich kann der Reifenrohling im Anschluss auf dem Zapfen seitenverkehrt aufgespannt werden, um auch hier von der frei zugänglichen Seite den gesamten Erstreckungsbereich der Seitenwand mittels der Andrückrolle belegen zu können. Dies erfordert jedoch jeweils ein Unterbrechen des Bespulens, ein Ausspannen des Reifenrohlings, ein Umdrehen und ein neues exakt Einspannen.

Bei derartigen Vorrichtungen ist es auch möglich - wenn der Zapfen sehr lang ausgebildet und ausreichen Raum zur Verfügung steht - den Spulkopf umzumontieren, so dass die zweite Seite ohne Abspannen des Reifenrohlings bespult werden kann. Dies setzt aber entweder voraus, dass der Spulkopf sowohl auf die andere Seite des Reifenrohlings als auch auf die andere Seite der Zapfenachse montiert wird. Dies erfordert einen sehr großen baulich frei zu haltenden zur Verfügung stehenden Raum für Demontage, Transport und Montage und auch zur Betriebsfähigkeit des gesamten Systems. Alternativ ist es bei derartigen Ausbildungen möglich den Spulkopf auf der gleichen Seite der Zapfenachse jedoch auf der anderen Seite des Reifenrohlings neu zu montieren und hierzu zusätzlich vor Neumontage die komplette Zufuhr von der Ausformeinrichtung ausgehend mit Andrückrolle umzubauen so dass der Spulprozess zur anderen Seite des Spulkopfes hin erfolgt. Auch dieser Umbau ist aufwendig und erfordert zusätzliche konstruktive Maßnahmen, die den sicheren Umbau im Betrieb gewährleisten.

Auf herkömmlichen Aufbautrommeln zum Aufbau eines Reifens, bei denen der Zugang zum Reifenrohling von allen Seiten durch baulich und funktionsbedingte Vorrichtungen erschwert ist, ist der Einsatz derartiger Vorrichtungen zusätzlich erschwert. Dies kann durch aufwendige zusätzliche Zufuhrmechanismen und Steuerungen zur Andrückrolle versucht werden, zumindest etwas auszugleichen. Die Bespulung von der zweiten Seite erfordert dennoch einen aufwendigen Umbau der Spulvorrichtung.

Aus der JP 10 067 055 A ist eine Vorrichtung bekannt, bei der ein streifenförmiges Kautschukmaterial zunächst einer Zwischentrommel zugeführt wird und mit dieser an eine Formtrommel heranbewegt und auf diese aufgelegt wird.

Der Erfindung liegt daher die Aufgabe zugrunde eine Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper, mit einem Gestell und mit einer im Gestell angeordneten Ausformungseinrichtung zur Profilierung von durch die Ausformungseinrichtung gefördertem Kautschukmaterial zu schaffen, mit der das Bespulen zum Aufbau einer Reifenaufbauschicht auf dem Aufbaukörper besonders einfach und dennoch zuverlässig ermöglicht wird.

Erfindungsgemäß gelöst wird die Aufgabe durch die Ausbildung einer Vorrichtung zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper gemäß den Merkmalen von Anspruch 1 mit einem Gestell und mit einer im Gestell angeordneten Ausformungseinrichtung zur Profilierung von durch die Ausformungseinrichtung gefördertem Kautschukmaterial, mit einer der Ausformungseinrichtung in Förderrichtung des profilierten Kautschukmaterials nachgeordneten endlos ausgebildeten um wenigstens eine Drehachse umlaufenden Tragefläche zum Transport des auf die Tragefläche abgelegten ausgeformten Kautschukmaterials aus dem Gestell heraus, die sich in Ihrer Umlaufrichtung jeweils an zwei gegenüberliegenden Seiten des Gestells aus dem Gestell heraus und wieder hinein erstreckt, und mit einer steuerbaren Antriebsverbindung zum wahlweisen gesteuerten Antrieb der umlaufenden Tragefläche in die eine oder in die andere Umlaufrichtung um die Drehachse.

Hierdurch kann wahlweise das ausgeformte Kautschukmaterial durch Wahl der Umlaufrichtung zur einen oder zur anderen Seite der Vorrichung hin zum Aufbau einer Reifenaufbauschicht auf einem Aufbaukörper zum Aufbau zugeführt und angedrückt werden. Je nach räumlichen und baulichen Gegebenheiten des rotatorisch angetriebenen Aufbaukörpers sowie des gewünschten Herstellungsprozesses kann die Vorrichtung an die jeweils zu bespulende Seite des Reifenrohlings von der baulich dies ermöglichenden Seite der Aufbautrommel herangeführt werden und durch einfache Wahl der Umlaufrichtung zum Reifenrohling hin ohne aufwendige Umbaumaßnahmen an der Vorrichtung, mit dem Kautschukmaterial bespult werden.

Besonders vorteilhaft ist die Ausbildung einer Vorrichtung gemäß den Merkmalen von Anspruch 2 mit jeweils wenigstens einem Abschnitt im Umlaufweg der umlaufenden Tragefläche außerhalb des Gestells, in dem die umlaufende Tragefläche senkrecht zur Tragefläche nach zur Krafteinleitung bei Übergabe des Kautschukmaterials an den Aufbaukörper zur Erzeugung des erforderlichen Anpressdruck gestützt ist.

Besonders vorteilhaft ist die Ausbildung einer Vorrichtung gemäß den Merkmalen von Anspruch 3, bei der die endlos ausgebildete um wenigstens eine Drehachse umlaufende Tragefläche zum Transport des auf die Tragefläche abgelegten ausgeformten Kautschukmaterials aus dem Gestell heraus, die sich in Ihrer Umlaufrichtung jeweils an zwei gegenüberliegenden Seiten des Gestells aus dem Gestell heraus und wieder hinein erstreckt, spiegelbildlich zu einer Ebene, die die Drehachse aufweist, ausgebildet ist, so dass der auf der einen Seite aus dem Gestell heraus- und wieder hinein erstreckte Teil der umlaufenden Tragefläche das Spiegelbild des auf der anderen Seite aus dem Gestell heraus- und wieder hinein erstreckten Teils der umlaufenden Tragefläche bildet.

Besonders vorteilhaft ist die Ausbildung einer Vorrichtung gemäß den Merkmalen von Anspruch 4, wobei die um wenigstens eine Drehachse umlaufende Tragefläche die Mantelfläche einer um eine Drehachse drehbare Trommel ist.

Besonders vorteilhaft ist die Ausbildung einer Vorrichtung gemäß den Merkmalen von Anspruch 5, wobei die um wenigstens eine Drehachse umlaufende Tragefläche ein um eine oder mehrere um jeweils eine Drehachse drehbare Umlenkkörper umlaufend geführtes Endlosband ist. Eine derartige Ausbildung ermöglicht die Förderung des Kautschukmaterials von der Ausformeinrichtung auch in eng zugebaute, schwer zugängliche Bereiche.

Besonders vorteilhaft ist die Ausbildung einer Vorrichtung gemäß den Merkmalen von Anspruch 6, mit einer Ausformungseinrichtung zur Profilierung des durch die Ausformungseinrichtung geförderten Kautschukmaterials und mit einem der Ausformungseinrichtung in Förderrichtung des profilierten Kautschukmaterials nachgeordneten um einen ersten um eine Drehachse drehbar gelagerten - insbesondere rotationssymetrischen - Umlenkkörper, wobei zum wahlweisen Zuführen und Andrücken von bandförmigem oder streifenförmigem profiliertem Kautschukmaterial von unterschiedlichen Seiten jeweils aus Richtung des ersten Umlenkkörpers zu einem oder zu mehreren jeweils um einen rotatorisch antreibbaren Aufbaukörper zum Aufbau jeweils einer Reifenaufbauschicht auf dem Aufbaukörper ein erster zweiter drehbar gelagerterinsbesondere rotationssymetrischer - Umlenkkörper in einer Position zum Zuführen und Andrücken von bandförmigem streifenförmigem profiliertem Kautschukmaterial von einer ersten Seite und ein zweiter zweiter drehbar gelagerter - insbesondere rotationssymetrischer - Umlenkkörper in einer Position zum Zuführen und Andrücken von bandförmigem streifenförmigem profiliertem Kautschukmaterial von einer zweiten Seite drehbar gelagert ist, wobei das umlaufende Enlosband um den ersten Umlenkkörper und sowohl um den ersten zweiten Umlenkkörper als auch um den zweiten zweiten Umlenkkörper geführt ausgebildet ist. Eine derartige Ausbildung ermöglicht die Förderung des Kautschukmaterials von der Ausformeinrichtung auch in besonders eng zugebaute, und sehr schwer zugängliche Bereiche.

Besonders vorteilhaft ist die Ausbildung einer Vorrichtung gemäß den Merkmalen von Anspruch 7, wobei jeweils die Drehachse des ersten zweiten Umlenkkörpers und die Drehachse des zweiten zweiten Umlenkkörpers gegenüber der Drehachse des ersten Umlenkkörpers gesteuert veränderbar ausgebildet ist. Das umlaufend gerührte Endlosband ermöglicht die Förderung des Kautschukmaterials von der Ausformeinrichtung auch in enger zugebaute, schwer zugängliche Bereiche, wobei jeweils durch gesteuerte Veränderung der Drehachse des zweiten Umlenkkörpers dieser erste bzw. der zweite Umlenkkörper und damit das geführte Endlosband jeweils im unmittelbaren Bereich des Auflegens des Kautschukmaterial auf den zum Aufspulen rotatorisch verdrehten Aufkörper an die zu bepulende Oberfläche und den Auflegeprozess optimiert angepasst werden kann. Das Kautschukmaterial kann somit in einfacher Weise auch in schwer zugänglichen Bereichen weiterhin über den vom ersten bzw. vom zweiten Umlenkkörper über das Endlosband ausgeübten Druck unter leichtem Druck und durch optimierte Ausrichtung im unmittelbaren Auflegebereich zuverlässig aufgespult werden.

Besonders vorteilhaft ist die Ausbildung einer Vorrichtung gemäß den Merkmalen von Anspruch 8 wobei das umlaufend geführte Endlosband zwischen erster Umlenkrolle und erster zweiter Umlenkrolle und zwischen erster und zweiter zweiter Umlenkrolle ein oberes und ein unteres Trumm aufweist, wobei das obere Trumm als Fördertrumm zur Förderung des profilierten Kautschukmaterials - insbesondere zum esten zweiten bzw. zum zweiten zweiten Umlenkkörper und - zum Aufbaukörper ausgebildet ist.

Besonders vorteilhaft ist die Ausbildung einer Vorrichtung gemäß den Merkmalen von Anspruch 9, mit einer steuerbaren Antriebseinheit und mit einer zumindest zur Förderung herstellbaren Antriebsverbindung zwischen Antriebseinheit und erstem Umlenkkörper zum wahlweise gesteuerten Verdrehen des ersten Umlenkkörpers um seine Achse in beide Drehrichtungen zum Antreiben des umlaufenden Endlosbandes um die Umlenkkörper über Mitnahmekontakt zwischen erstem Umlenkkörper und umlaufendem Endlosband.

Besonders vorteilhaft ist die Ausbildung einer Vorrichtung gemäß den Merkmalen von Anspruch 10, wobei die Ausformeinrichtung im Gestell oberhalb der umlaufenden Tragefläche ausgebildet ist.

Besonders vorteilhaft ist die Ausbildung einer Vorrichtung gemäß den Merkmalen von Anspruch 11, wobei die Ausformeinrichtung ein Formkalander ist.

Besonders vorteilhaft ist die Ausbildung einer Vorrichtung gemäß den Merkmalen von Anspruch 12, wobei der Ausformeinrichtung in Förderrichtung vorgeordnet eine Herstellungseinrichtung -insbesondere eine Extrudereinrichtung - zur Erzeugung von bandförmigem Kautschukmaterial vorgeordnet ist.

Besonders vorteilhaft ist die Ausbildung einer Vorrichtung gemäß den Merkmalen von Anspruch 13, wobei der Ausformeinrichtung in Förderrichtung vorgeordnet eine steuerbare Ablängeinrichtung zur gesteuerten Ablängung der zum Auflegen erforderlichen Band- oder Streifenlängen des Kautschukmaterials ausgebildet ist.

Besonders vorteilhaft ist die Ausbildung einer Vorrichtung gemäß den Merkmalen von Anspruch 14, mit Mitteln zum gesteuerten Heranführen - insbesondere durch Verschieben - der Vorrichtung in eine Betriebsposition am Aufbaukörper und zum gesteuerten Entfernen - insbesondere durch Verschieben - der Vorrichtung aus der Betriebsposition in eine Ruheposition entfernt vom Aufbaukörper.

Die Erfindung wird im Folgenden an Hand der in den Figuren 1 bis 8 dargestellten Ausführungsbeispiele näher erläutert. Darin zeigen:
- Fig.1: Schematische Darstellung einer Station zur Bespulung eines Reifenrohlings mit streifenförmigem Kautschukmaterial mit auf einer Trommel aufgebautem Reifenrohling und einem Spulkopf,
- Fig. 2: Schematische Schnittdarstellung des Spulkopfs,
- Fig. 3: Fig. 3a bis Fig.3c schematische Darstellung gemäß Ansicht A-A von Fig. 2 und Fig. 3d schematische Darstellung gemäß Ansicht B-b von Fig. 2 zur Erläuterung der Drehachsenverstellung mit in den in Fig.3a, Fig.3b und Fig.3c unterschiedlichen Einstellungen,
- Fig. 4: Vereinfachte schematische Darstellung des Spulkopfes mit in Fig. 4a bis Fig. 4g dargestellten Verfahrensschritten zur Erläuterung der Zufuhr und des Ablängens von Kautschukmaterial,
- Fig. 5: Darstellung des Aufspulprozesses eines Kautschukstreifens zur Erzeugung einer Reifenseitenwand,
- Fig. 6: Darstellung des Aufspulprozesses eines Kautschukstreifens zur Erzeugung eines Laufstreifens,
- Fig. 7: Darstellung alternativer Ausführungen in Fig.7a und Fig.7b,
- Fig. 8: Schematische Schnittdarstellung des Spulkopfs in alternativer Ausbildung.

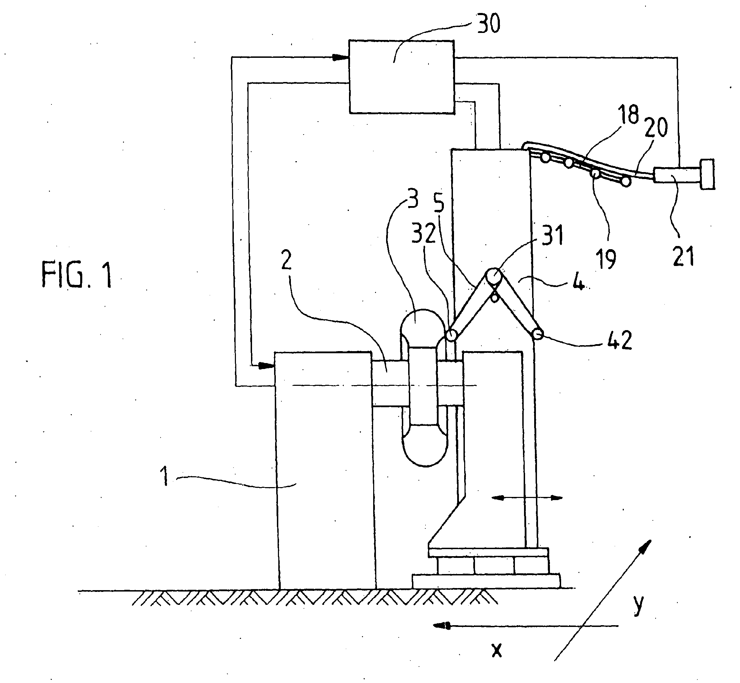

Fig. 1 zeigt einen Reifenrohling, der in herkömmlicher Weise auf einer in einem Gestell 1 drehbar gelagerten und über eine Steuereinheit 30 rotatorisch gesteuert angetriebenen Aufbautrommel 2 koaxial zur Aufbautrommel 2 aufgebaut und befestigt ist.

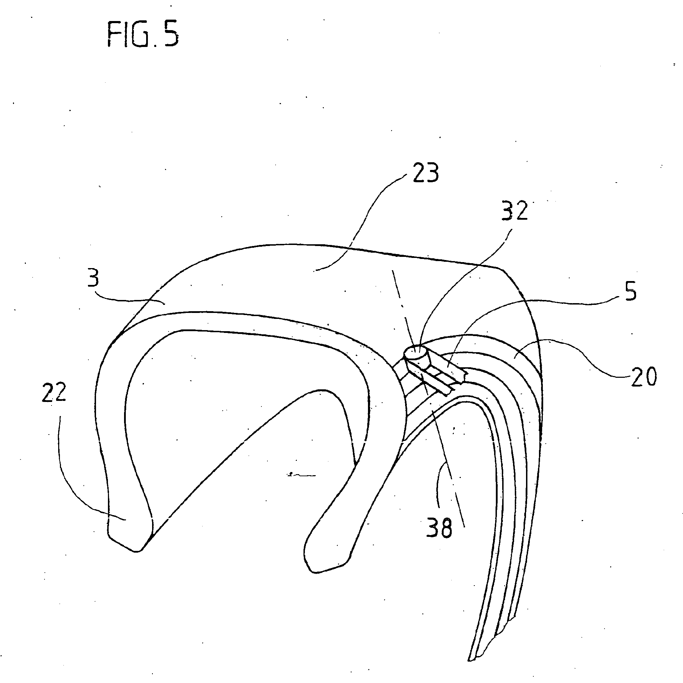

Der Reifenrohling besteht - wie in Fig. 5 dargestellt - aus einer in herkömmlicher Weise ausgebildeten Karkasse 3 aus einer oder mehreren nicht dargestellten Lagen von in Kautschuk eingebetteten Festigkeitsträgern, die sich von Wulstbereich 22 zu Wulstbereich 22 des Reifenrohlings axial erstrecken. Der Reifenrohling ist torusförmig ausgebildet und auf der Reifenaufbautrommel 2 befestigt.

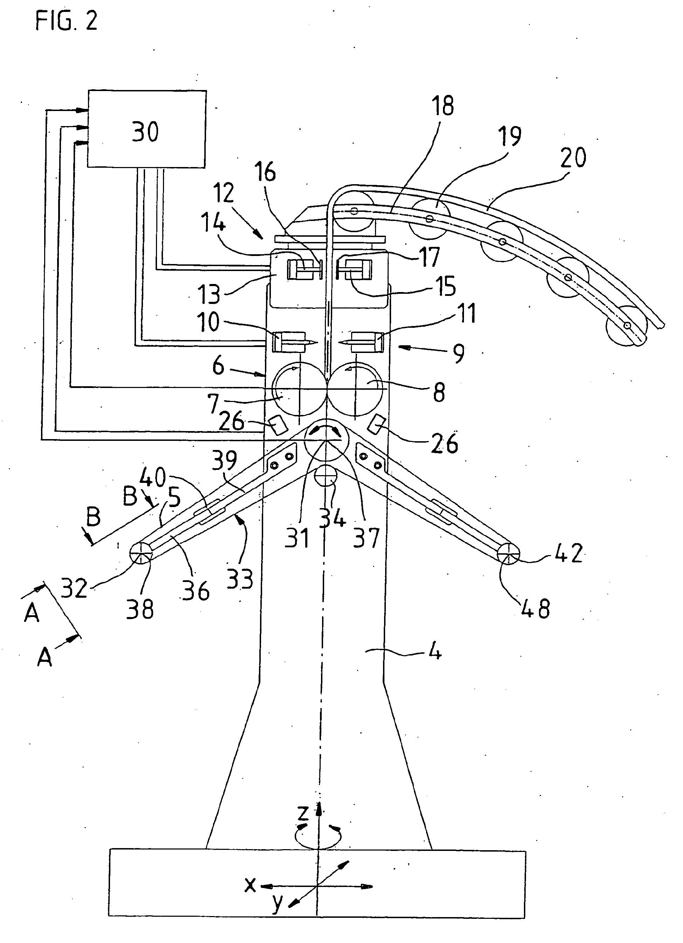

In Fig. 1 und Fig. 2 ist darüber hinaus ein Spulkopf 4 dargestellt. Aus einem Extruder 21 bekannter Art wird rundschnurförmiges oder bandförmiges Kautschukmaterial 20 über einen am Spulkopf 4 befestigten Rollenträger mit in Förderrichtung hintereinander in einem Gestell 18 des Rollenträgers drehbar gelagerten Förderrollen 19, und im Anschluss daran zwischen zwei Halteplatten 16 und 17 hindurch, die jeweils an einem Hubkolben 14 bzw. 15 eines pneumatisch oder hydraulisch betätigbaren und von der Steuereinheit 30 gesteuert betätigten Hubkolbenzylinders in einem im Spulkopf 4 verschiebbar gelagerten Rahmen 13 befestigt sind, im Anschluss daran zwischen zwei jeweils an einem hydraulisch oder pneumatisch betätigbaren und von der Steuereinheit 30 gesteuert betätigten mit jeweils einem Hubkolbenmesser 10 bzw. 11 versehenen Hubkolben eines Hubkolbenzylinders einer Schneideeinrichtung 9 hindurch und zwischen zwei in Förderrichtung nachgeordneten zusammenwirkenden gesteuert von der Steuereinrichtung 30 rotatorisch angetriebenen Kalanderwalzen 7 und 8 eines Formkalanders 6 von den Kalanderwalzen hindurch gezogen auf ein nachgeordnetes Auflegeband 5 weiterfördert werden. Über das Auflegeband 5 wird das von den profilierten Kalanderwalzen 6 und 7 des Formkalanders 6 ausgeformte bandförmige Material - wie in Fig. 1 und Fig. 5 zu erkennen ist - zwischen Wulstbereich 22 und Lauffläche des zu fertigenden Reifens auf die Karkasse des Reifenrohlings unter Druck aufgerollt.

Hierzu wird zunächst der Spulkopf 4 in die parallel zur Rotationsachse der Reifenaufbautrommel 2 in den Figuren 1 und 2 dargestellte x-Richtung soweit verschoben, dass das Auflegeband 5 in Berührkontakt mit dem Reifenrohling gerät. Durch von der Steuereinheit 30 gesteuertes, stufenloses Verschieben über eine nicht dargestellte bekannte Verschiebeeinrichtung in die Koordinatenrichtung x parallel zur Rotationsachse der Reifenaufbautrommel 2 und die Koordinatenrichtung y senkrecht zur Rotationsachse der Reifenaufbautrommel 2 kann dabei der Spulkopf 4 jeweils so positioniert werden, dass das Auflegeband 5 mit gewünschtem Druck im Berührkontakt zum Reifenrohling 3 steht. Darüber hinaus ist - wie in Fig. 2 dargestellt ist - der Spulkopf 4 in bekannter nicht dargestellter Weise um eine senkrecht zur x-y-Ebene ausgerichtete Achse z stufenlos gesteuert schwenkbar, so dass über die Steuereinheit 30 der Spulkopf 4 jeweils so positioniert wird, dass das Auflegeband 5 jeweils an die zum Aufspulen gewünschte Oberflächenposition des Reifenrohlings herangeschwenkt werden kann.

Hierdurch wird - wie in Fig. 5 dargestellt ist - während der gesteuerten Rotation des Reifenrohlings um die Rotationsachse der Reifenaufbautrommel 2 das durch die Kalanderwalzen 7 und 8 ausgeformte Kautschukmaterial 20 von radial innen nach radial außen kontinuierlich auf die Karkasse aufgespult. Dabei können die einzelnen Windungen nebeneinander oder aber bei Bedarf auch einander überlappend ausgespult werden. Dies ist durch entsprechenden Vorschub der Bewegung des Spulkopfes 4 in der x-y-Ebene entlang der Kontur des torusförmigen Reifenrohlings möglich. Bei Bedarf wird hierzu kotinuierlich das Auflegeband 5 in seiner Förderrichtung an die jeweils zu belegende Oberfläche der Kontur des torusförmigen Reifenrohlings durch gesteuertes Schwenken des Spulkopfs 4 um die z-Achse nachgestellt.

Bei Erfordernis wird in einer nicht dargestellten Ausführung zusätzlich das Auflegeband 5 in z-Richtung stufenlos gesteuert verschiebbar ausgebildet ist. Bei einer derartigen Ausführung kann auch die Aufspulposition des Auflegebands 5 gegenüber dem Reifenrohling in z-Richtung individuell gesteuert eingestellt oder während des Spulens verändert werden.

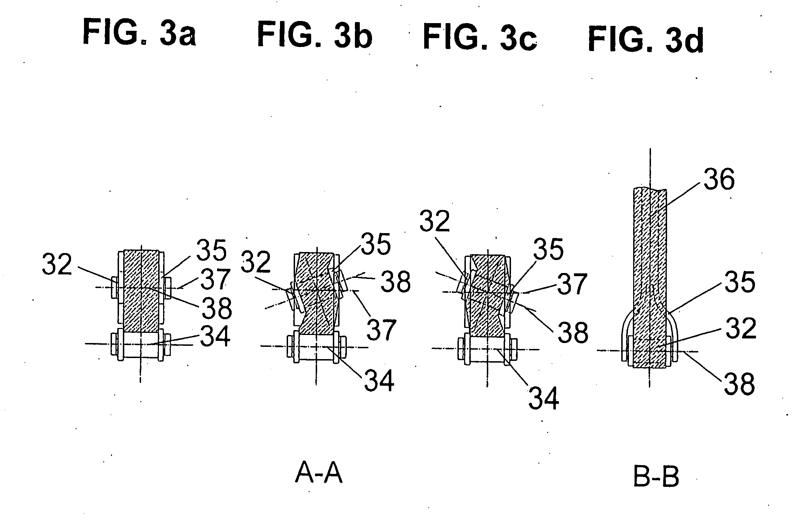

Das Auflegeband 5 ist ein - wie in Fig. 2 und Fig. 3a bis 3d dargestellt - ein um eine erste Umlenkrolle 31 und um eine erste zweite Umlenkrolle 32 sowie um eine um eine zweite zweite Umlenkrolle 42 umlaufend geführtes endloses Förderband. Die Umlenkrolle 31 ist um eine Drehachse 37 drehbar im Gestell 4 gelagert und steht über ein nicht dargestelltes Antriebsgetriebe - beispielsweise ein Zahnradgetriebe - in bekannter Weise mit einem von der Steuereinheit 30 gesteuerten nicht dargestellten Antriebsmotor in Antriebsverbindung mit gesteuert wählbarer Drehrichtung der Umlenkrolle 31 um die Drehachse 37. Im Gestell 4 sind zwei stangenförmige Haltetraversen 39 befestigt, die sich jeweils in radialer Richtung der Umlenkrolle 31 außerhalb der Umlenkrolle 31 von der Umlenkrolle 31 wegweisend jedoch zu zwei gegenüberliegenden Seiten aus dem Gestell 4 heraus mit einer Neigung nach unten erstrecken. In dem von der Umlenkrolle 31 jeweils wegweisenden Ende der stangenförmigen Haltetraverse 39 ist in Verlängerung der stangenförmigen Haltetraverse 39 jeweils eine Welle 36 um ihre Drehachse drehbar gelagert. Mittels jeweils eines Verstellmechanismus 40 bekannter Art, der mit der Steuereinheit 30 in Verbindung steht kann die Welle 36 gesteuert um ihre Drehachse und zwar wahlweise in beide Drehrichtungen verdreht werden. Der Verstellmechanismus 40 ist beispielsweise ein Servomotor oder ein Schrittmotor mit Getriebe bekannter Art. An dem von der stangenförmigen Haltetraverse 39 wegweisenden Ende der Welle 36 ist die Welle 36 jeweils als Haltegabel 35 ausgebildet. In den beiden Schenkeln der einen Haltegabel 35 ist die erste zweite Umlenkrolle 32 um eine Drehachse 38 drehbar und in den beiden Schenkeln der anderen Haltegabel 35 ist die zweite zweite Umlenkrolle 42 um eine Drehachse 48 drehbar gelagert. Die Drehachse 38 liegt in einer zur Drehachse 37 der ersten Umlenkrolle 31 parallelen Ebene. Die Drehachse 48 liegt ebenfalls in einer zur Drehachse 37 der ersten Umlenkrolle 31 parallelen Ebene. Das Auflegeband 5 ist um die erste, um die erste zweite Umlenkrolle 32 und um die zweite zweite Umlenkrolle 42 herum geführt und erstreckt sich mit ihrem oberen Trumm zwischen erster zweiter Umlenkrolle 32, erster Umlenkrolle 31 und zweiter zweiter Umlenkrolle 42 und mit ihrem unteren Trumm wieder zurück zwischen zweiter zweiter Umlenkrolle 42, erster Umlenkrolle 31 und erster zweiter Umlenkrolle 32. Unterhalb der ersten Umlenkrolle 31 ist eine weitere außerhalb des Auflegebandes 5 auf das untere Trumm als Spannrolle einwirkende Umlenkrolle 34 um eine parallel zur Drehachse 37 der ersten Umlenkrolle ausgebildete Drehachse im Gestell 4 drehbar gelagert.

Durch Wahl der Antriebsdrehrichtung der ersten Umlenkrolle 31 wird somit die Förderrichtung des oberen Trumms des Auflegebands 5 entweder in Richtung zur ersten zweiten Umlenkrolle 32 oder aber zur zweiten zweiten Umlenkrolle 42 gewählt. Auf diese Weise kann das ausgeformte Kautschukmaterial zum Auflegen gesteuert entweder zur einen Seite des Spulkopfs 4 oder aber zur anderen Seite des Spulkopfs 4 gefördert werden.

Bei der in Figur 1 dargestellten Aufbautrommel 2 wird bei dieser Ausführung beispielsweise das Kautschukmaterial, mit dem die rechte dargestellte Seite des Reifenrohlings bespult wird, über das obere Trumm des Auflegebandes 5 über die erste zweite Umlenkrolle 32 bespult. Dabei befindet sich der Spulkopf in einer Position rechts vom Reifenrohling. Zur Bespulung der links dargestellten Seite wird der Spulkopf in eine Position links vom Reifenrohling positioniert. Die linke dargestellte Seite des Reifenrohlings wird dann bei entgegen gesetzter Drehrichtung der angetriebenen ersten Umlenkrolle 31 über das obere Trumm des Auflegebandes 5 und über die zweite zweite Umlenkrolle 42 bespult.

Durch Verdrehen der einen Welle 36 wird die Drehachse 33 der ersten zweiten Umlenkrolle 32 in deren zur Drehachse 37 der ersten Umlenkrolle 31 parallelen Ebene und durch Verdrehen der anderen Welle 36 wird die Drehachse 33 der zweiten zweiten Umlenkrolle 42 in deren zur Drehachse 37 der ersten Umlenkrolle 31 parallelen Ebene entsprechend verdreht.

Das Verdrehen wird in den Fig. 3a bis Fig. 3c am Beispiel der Verdrehung der ersten zweiten Umlenkrolle 32 gezeigt. Fig. 3a zeigt die Einstellung, bei der die Drehachse 38 der ersten zweiten Umlenkrolle 32 parallel zur Drehachse 37 der ersten Umlenkrolle 31 ausgerichtet ist. Fig. 3b und Fig. 3c zeigen jeweils eine Einstellung, bei der die Drehachse 38 der ersten zweiten Umlenkrolle 32 innerhalb einer parallel zur Drehachse 37 der ersten Umlenkrolle 31 ausgerichteten Ebene unter Einnahme eines Schnittwinkels gegenüber der in Figur 3a dargestellten Ausgangslage jeweils in unterschiedliche Richtung gesteuert verdreht ist.

Auf diese Weise wird die erste zweite Umlenkrolle 32 bzw. die zweite zweite Umlenkrolle 42 jeweils derart gesteuert in ihrem Schnittwinkel und somit ihrer Lage zur ersten Umlenkrolle 31 eingestellt, dass das über das obere Trumm des Förderbandes 5 geförderte, ausgeformte Kautschukmaterial mit seiner Oberfläche parallel zur Oberfläche des torusförmigen Reifenrohlings im Bereich des Andrückkontaktes ausgerichtet ist und in dieser parallelen Ausrichtung aufgelegt und von der ersten zweiten Umlenkrolle 32 bzw. von der zweiten zweiten Umlenkrolle 42 und das Auflegeband 5 angedrückt wird.

Es kann zum Teil sinnvoll sein gezielt auch einen Verschränkungswinkel beim Auflegen zwischen Oberfläche des geförderten, ausgeformten Kautschukmaterials und Oberfläche des torusförmigen Reifenrohlings im Bereich des Andrückkontaktes einzustellen. Zum Teil kann es auch sinnvoll sein, diesen Verschränkungswinkel während des Aufspulens gezielt zu verändern. So kann es zum Beispiel sinnvoll sein, während des Aufpulens eines Seitenwandkautschukmaterials zum Herstellen einer Reifenseitenwand im Wulstbereich der Reifenseitenwand einen größeren Verschränkungswinkel als im Reifenschulterbereich der Seitenwand einzustellen. Die gezielte Einstellung oder Veränderung des Verschränkungswinkels zwischen Oberfläche des geförderten, ausgeformten Kautschukmaterials und Oberfläche des torusförmigen Reifenrohlings im Bereich des Andrückkontaktes wird hierzu ebenfalls durch eine gesteuerte Veränderung des Schnittwinkels der Drehachse 38 der ersten zweiten Umlenkrolle 32 bzw. der Drehachse der zweiten zweiten Umlenkrolle 42und somit ihrer Lage zur ersten Umlenkrolle 31 bewirkt.

Sobald das zwischen den Hubkolbenmessern 10 und 11 hindurch gezogene rundschnurförmige oder bandförmige Kautschukmaterial eine derartige Länge erreicht hat, dass es der für die Herstellung der Seitenwand des Reifenrohlings gewünschten Aufspullänge entspricht, wird durch Steuereinheit 30 ein Schneideprozess ausgelöst. Hierzu werden die Hubkolben der Hubkolbenmesser 10 und 11 pneumatisch bzw. hydraulisch im jeweiligen Hubkolbenzylinder auf einander zu verschoben und hierdurch das rundschnurförmige bzw. bandförmige Kautschukmaterial durch die von beiden Seiten einwirkenden Hubkolbenmesser 10 und 11 zerschnitten.

Sobald das durch den Schneideprozess erzeugte Ende des abgeschnittenen Kautschukstreifens von dem Auflegeband 5 auf die Seitenwand des Reifenrohlings aufgedrückt wurde, wird der Spulkopf durch gesteuertes Verschieben in der x-y-Ebene vom Reifenrohling entfernt.

Zum Bespulen einer neuen Reifenseitenwand wird der Spulkopf gesteuert zur entsprechenden Bepulungsposition verschoben und soweit an den Reifenrohling herangeführt, dass der Spulprozess zum Aufbau der Reifenseitenwand eingeleitet werden kann.

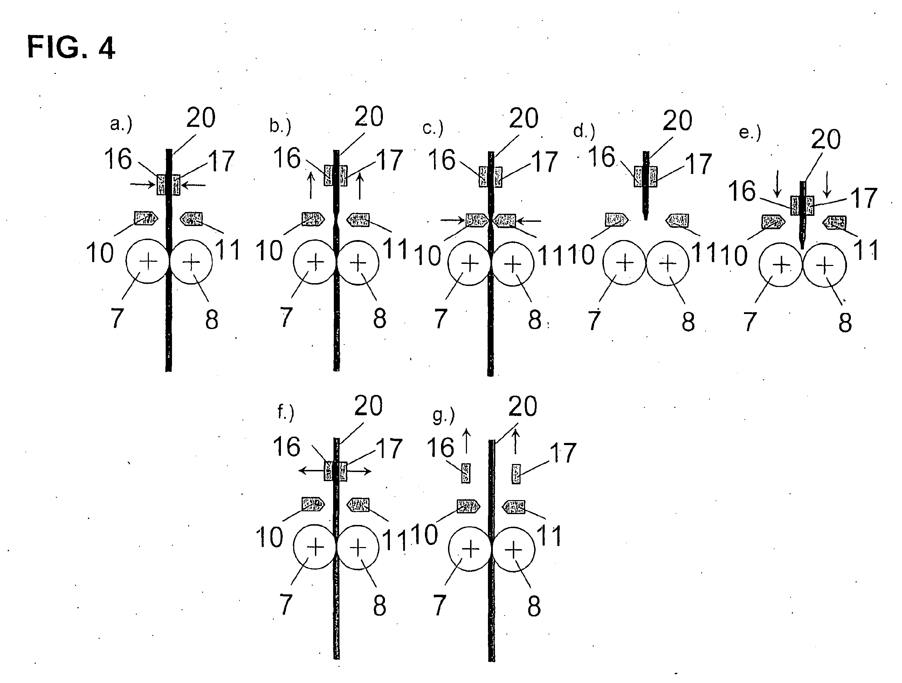

Zum Einführen des Anfangs eines vom Extruder neu erzeugten rundschnurförmigen oder bandförmigen Kautschukstranges zwischen die Kalanderwalzen 7 und 8 werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Förderrichtung auf die Kalanderwalzen 7 und 8 des Formkalanders 6 zu bewegt, so dass das Kautschukbandes 20 zwischen den Kalanderwalzen 7 und 8 eingeführt und von den Kalanderwalzen 7 und 8 durch den in den Kalanderspalt zwischen den Kalanderwalzen 7 und 8 eingezogen wird. Dieser Zustand ist in Fig. 4a dargestellt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Zum Schneiden werden zunächst die Hubkolben 14 und 15 von der Steuereinheit 30 gesteuert hydraulisch bzw. pneumatisch soweit aufeinander zu bewegt, dass die parallel zum Kautschukband 20 ausgerichteten Halteplatten 16 bzw. 17 jeweils in Reibkontakt zum Kautschukband 20 geraten und das Kautschukband 20 zwischen sich festhalten. Danach wird von der Steuereinheit 30 gesteuert der parallel zur Förderrichtung des Kautschukbandes 20 verschiebbar im Spulkopf 4 gelagerte Rahmen 13 in Fördergeschwindigkeit der Kalanderwalzen 7 und 8 in Förderrichtung auf die Kalanderwalzen 7 und 8 des Formkalanders 6 zu bewegt, so dass das Kautschukbandes 20 in Richtung des zwischen den Kalanderwalzen 7 und 8 gebildeten Kalanderspaltes geführt wird, wobei das Kautschukband 20 weiterhin von den Kalanderwalzen 7 und 8 durch den in den Kalanderspalt zwischen den Kalanderwalzen 7 und 8 eingezogen wird. Dieser Zustand ist in Fig. 3a dargestellt. Danach wird der Rahmen 13 wieder in Gegenförderrichtung gesteuert zurückbewegt. Das zwischen den Halteplatten 16 und 17 und zwischen den Kalanderwalzen 7 und 8 jeweils eingespannte Kautschukband 20 wird hierdurch zwischen den beiden Einspannpositionen gedehnt. Hierdurch entsteht eine Einschnürung des Kautschukbandes 20. Die Position der Hubkolbenmesser 10 und 11 im Spulkopf 4 ist dabei so gewählt, dass diese im Bereich des erwarteten dünnsten Querschnitts des gedehnten Materials positioniert sind. Dies ist in Fig. 4b dargestellt. Danach werden - wie in Fig. 4c zu erkennen ist - die Hubkolbenmesser 10 und 11 hydraulisch bzw. pneumatisch gesteuert aufeinander zu bewegt, so dass das Kautschukband 20 im Bereich des dünnsten Querschnitts durchtrennt wird. Das Ende des vorangegangenen Streifenmaterials wird weiter zum Reifenrohling gefördert. Wie in Fig.4d zu erkennen ist, ist auch der Anfang des nächsten Streifenmaterials verjüngt ausgebildet und wird - wie in Fig. 4e zu erkennen ist - durch Verschieben des Rahmens 13 in Förderrichtung in den Kalanderspalt zwischen die Kalanderwalzen 7 bzw. 8 eingerührt. Danach wird - wie in Fig. 4f zu erkennen ist - der Kontakt zwischen den Halteplatten 16 und 17 zum Kautschukstreifen durch hydraulisches Betätigen der Hubkolben 14 und 15 senkrecht zur Förderrichtung des Kautschukbandes 20 weg vom Kautschukmaterial wiederum gelöst. Danach wird - wie in Fig.4g dargestellt ist - der Rahmen 13 wiederum in seine Ausgangsposition angehoben.

Wie in den Figuren 4c zu erkennen, ist auch das Ende des vorangegangenen Streifens verjüngt ausgebildet. Die Verjüngung von Anfang und Ende des Kautschukstreifens ermöglichen beim Aufspulen auf die Oberfläche des Reifenrohlings am Anfang und am Ende einen gleichmäßigen Übergang zur Oberfläche des Reifenrohlings.

Zur Ermittlung der Länge des Kautschukstreifenmaterials zur richtigen Ablängung auf die aufzuspulende Länge wird in einer Ausführung die Länge aus den vorhandenen Daten über Fördergeschwindigkeit, die beispielsweise aus der Drehgeschwindigkeit der Kalanderwalzen 7 und 8 ermittelt wird oder direkt gemessen wird, und der Förderzeit ermittelt. In einer alternativen Ausführung wird - wie in Fig. 2 dargestellt - die Länge des geförderten Kautschukbandmaterials mittels im Spulkopf ausgebildeten Sensoren 26 zur Ermittlung eines Kautschukbandes bekannter Art gemessen und diese Daten an die Steuereinheit zur Verarbeitung weitergeleitet. Die Sensoren sind beispielsweise zwischen Schneideeinrichtung mit Hubschneidemessern 10 und 11 und dem Formkalander 6 mit den Kalanderwalzen 7 und 8 oder aber - wie in Fig. 2 dargestellt ist - in Förderrichtung dem Kalander angeordnet.

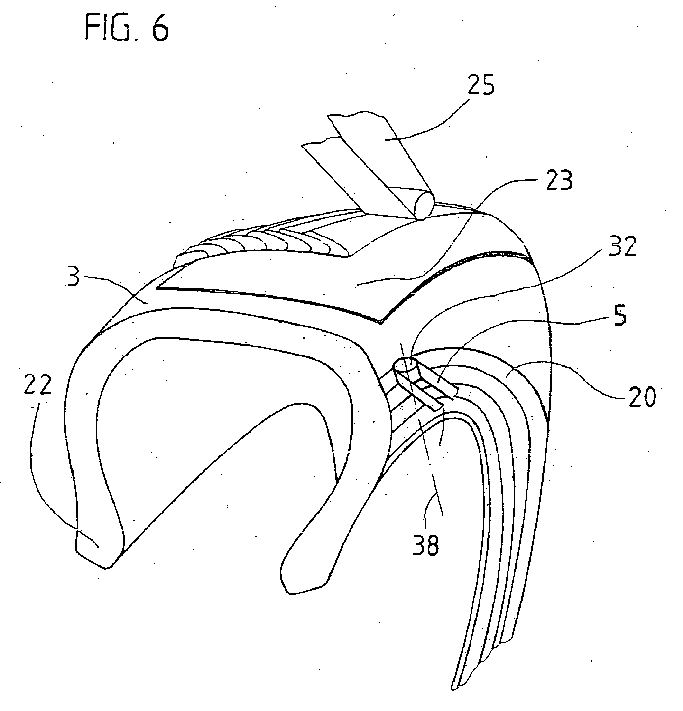

Wie in Fig. 6 dargestellt ist, wird in einer anderen Ausführung auch der Laufstreifen eines Reifens über einen - wie oben dargestellten - Spulkopf 4 aus einem in entsprechend gleicher Weise hergestellten Kautschukstreifen über ein Auflegeband 25 des Spulkopfs 4 aufgespult. In Fig. 5 ist dabei eine Ausführung dargestellt, bei der der Kautschukstreifen auf einen auf die Karkasse des Reifenrohlings aufgebauten Gürtel 23 bekannter Art aufgespult wird.

Es ist möglich, unterschiedliche Dicken des Laufstreifens und / oder der Seitenwand durch gesteuerte Änderung des Vorschubes des Spulkopfes entlang der zu bespulenden Reifenkontur und somit durch gezielte unterschiedliche Überlappung der einzelnen nebeneinander ausgebildeten Windungen des gespulten Streifenmaterials auszubilden.

Hierzu kann zusätzlich durch gezielte Veränderung des Ausrichtewinkels des Auflegebandes 5 bzw. des Auflegebandes 25 zur Oberfläche des Reifenrohlings durch gesteuertes Verdrehen der Welle 36 um ihre Achse und somit der Drehachse 32 der ersten zweiten Umlenkrolle 32 bzw. der zweiten zweiten Umlenkrolle 42 die Konturierung und Dickenverteilung gesteuert beeinflusst werden.

Ebenso ist es möglich, den Laufstreifen bzw. die Seitenwand aus mehreren derartigen Kautschukstreifen aufzuspulen. Dabei können diese Kautschukstreifen bei Bedarf aus unterschiedlichem Kautschukmaterial und/oder unterschiedlich ausgeformt sein. Die unterschiedliche Ausformung erfolgt beispielsweise durch geänderte Kalanderwalzen 7 und 7 des Formkalanders.

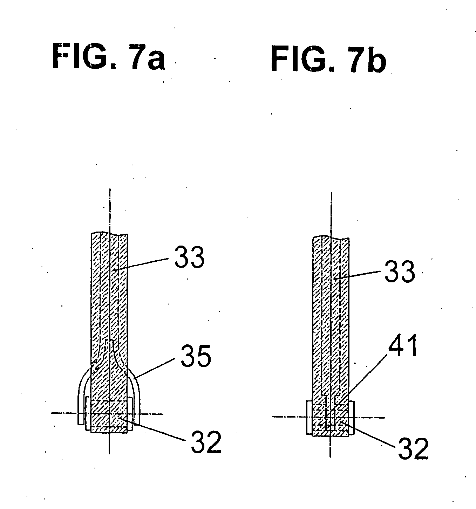

Anstelle der in Fig. 3a bis Fig. 3d sowie in Fig. 7a dargestellten Ausbildung, bei der die erste zweite Umlenkrolle 32 bzw. die zweite Umlenkrolle 42 in dem als Haltegabel 35 ausgebildeten Ende der Welle 36 gelagert ist, ist in einer anderen - in Fig. 7b dargestellten - Ausführung das Ende der Welle 36 nicht als Haltegabel 35, sondern als Platte mit einer Durchgangsbohrung und einem in der Durchgangsbohrung befestigten Bolzen ausgebildet, der sich beiderseits der Platte aus der Durchgangsbohrung heraus erstreckt und dort jeweils als Lagerzapfen ausgebildet ist. Auf dem Lagerzapfen ist konzentrisch zueinander beiderseits der Platte jeweils eine Umlenkrolle 42 drehbar gelagert. Diese beiden Umlenkrollen 42 bilden als Paar jeweils eine oben angesprochene zweite Umlenkrolle 32 bzw. 42.

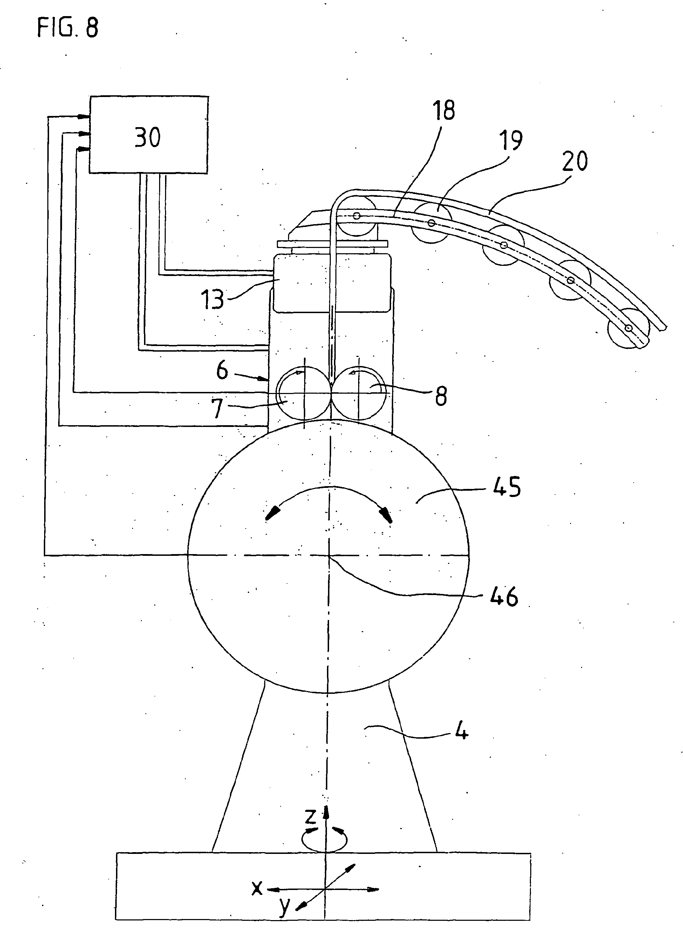

Fig. 8 zeigt eine alternative Ausbildung des Spulkopfes 4, bei der gegenüber der in Fig. 2 dargestellten Ausführung lediglich anstelle des um die erste Umlenkrolle 31, die erste zweite Umlenkrolle 32 und die zweite zweite Umlenkrolle 32 umlaufend geführten Auflegebandes eine einzige Auflegetrommel 45 um eine Drehachse 46 im Gestell 1 des Spulkopfes drehbar gelagert und von der Steuereinheit 30 gesteuert über einen nicht dargestellten Motor und ein nicht dargestelltes Antriebsgetriebe bekannter Art wahlweise in die eine oder in die andere Drehrichtung um die Drehachse 46 gesteuert verdreht werden kann. Die Auflegetrommel 45 weist einen Durchmesser ihrer beispielsweise zylindrischen Manteloberfläche auf, der größer ist als die Breite des Gestells 1 des Spulkopfes. Die Auflegetrommel 46 ist dabei derart im Gestell 1 gelagert angeordnet, dass sich die Manteloberfläche der Auflegetrommel 46 - wie in Figur 8 dargestellt - nach beiden Seiten spiegelbildlich gleich weit aus dem Gestell 1 heraus erstreckt. Der Einfachheit halber sind in Fig. 8 die Zuführeinrichtung 12 nicht detailliert und die Schneideeinrichtung 9 sowie die Sensoren 26 nicht eingezeichnet.

Durch Wahl der Antriebsdrehrichtung der Auflegetrommel 46 wird das ausgeformte Kautschukmaterial von der Auflegetrommel 46 zum Auflegen gesteuert entweder zur einen Seite des Spulkopfs 4 oder aber zur anderen Seite des Spulkopfs 4 gefördert und direkt von der Auflegetrommel 46 auf die zu belegenden Schichten der Aufbautrommel 2 oder des Reifenrohlings aufgespult.

### Bezugszeichenliste

### (Teil der Beschreibung)

- 1: Gestell
- 2: Reifenaufbautrommel
- 3: Karkasse
- 4: Spulkopf
- 5: Auflegeband
- 6: Formkalander
- 7: Kalanderwalze
- 8: Kalanderwalze
- 9: Schneideeinrichtung
- 10: Hubkolbenmesser
- 11: Hubkolbenmesser
- 12: Zuführeinrichtung
- 13: Rahmen
- 14: Hubkolben
- 15: Hubkolben
- 16: Halteplatte
- 17: Halteplatte
- 18: Träger
- 19: Führungsrolle
- 20: Kautschukband
- 21: Extruder
- 22: Wulstbereich
- 23: Gürtellagen
- 24: Kautschukband
- 25: Auflegeband
- 26: Sensor
- 30: Steuereinheit
- 31: erste Umlenkrolle
- 32: zweite Umlenkrolle
- 33: Fördertisch
- 34: Umlenkrolle
- 35: verdrehbare Gabel
- 36: Welle
- 37: Drehachse
- 38: Drehachse
- 39: Haltestange
- 40: Verdrehmechanismus
- 41: Lagerbuchse
- 42: Umlenkrolle
- 45: Auflegetrommel
- 46: Drehachse

## Patentansprüche

1. Vorrichtung (4) zum Zuführen und Andrücken von bandförmigem oder streifenförmigem profiliertem Kautschukmaterial zu einem um einen rotatorisch antreibbaren Aufbaukörper zum Aufbau einer Reifenaufbauschicht auf dem Aufbaukörper
- mit einem Gestell,
**dadurch gekennzeichnet,**
- **dass** im Gestell eine Ausformungseinrichtung (6) zur Profilierung von durch die Ausformungseinrichtung (6) gefördertem Kautschukmaterial angeordnet ist,
- **dass** eine endlos ausgebildete um wenigstens eine Drehachse umlaufende Tragefläche zum Transport des auf die Tragefläche abgelegten ausgeformten Kautschukmaterials aus dem Gestell heraus, die sich in Ihrer Umlaufrichtung jeweils an zwei gegenüberliegenden Seiten des Gestells aus dem Gestell heraus und wieder hinein erstreckt, der Ausformungseinrichtung (6) in Förderrichtung des profilierten Kautschukmaterials nachgeordnet ist,
- mit einer steuerbaren Antriebsverbindung zum wahlweisen gesteuerten Antrieb der umlaufenden Tragefläche in die eine oder in die andere Umlaufrichtung um die Drehachse.

2. Vorrichtung gemäß den Merkmalen von Anspruch 1,
- mit jeweils wenigstens einem Abschnitt im Umlaufweg der umlaufenden Tragefläche außerhalb des Gestells in dem die umlaufende Tragefläche senkrecht zur Tragefläche zur Krafteinleitung bei Übergabe des Kautschukmaterials an den Aufbaukörper zur Erzeugung des erforderlichen Anpressdruck gestützt ist.

3. Vorrichtung gemäß den Merkmalen von Anspruch 1 oder 2,
- bei der die endlos ausgebildete um wenigstens eine Drehachse umlaufende Tragefläche zum Transport des auf die Tragefläche abgelegten ausgeformten Kautschukmaterials aus dem Gestell heraus, die sich in Ihrer Umlaufrichtung jeweils an zwei gegenüberliegenden Seiten des Gestells aus dem Gestell heraus und wieder hinein erstreckt, spiegelbildlich zu einer Ebene, die die Drehachse aufweist, ausgebildet ist, so dass der auf der einen Seite aus dem Gestell heraus- und wieder hinein erstreckte Teil der umlaufenden Tragefläche das Spiegelbild des auf der anderen Seite aus dem Gestell heraus- und wieder hinein erstreckten Teils der umlaufenden Tragefläche bildet.

4. Vorrichtung gemäß den Merkmalen von Anspruch 1, 2 oder 3,
wobei die um wenigstens eine Drehachse umlaufende Tragefläche die Mantelfläche einer um eine Drehachse (46) drehbar gelagerte Trommel (45) ist.

5. Vorrichtung gemäß den Merkmalen von Anspruch 1, 2 oder 3,
wobei die um wenigstens eine Drehachse umlaufende Tragefläche ein um eine oder mehrere um jeweils eine Drehachse drehbar gelagerte Umlenkkörper (31,32,42) umlaufend geführtes Endlosband (5) ist.

6. Vorrichtung gemäß den Merkmalen von Anspruch 5,
mit einem der Ausformungseinrichtung (6) in Förderrichtung des profilierten Kautschukmaterials nachgeordneten um einen ersten um eine Drehachse (37) drehbar gelagerten - insbesondere rotationssymetrischen - Umlenkkörper (31),
wobei zum wahlweisen Zuführen und Andrücken von bandförmigem oder streifenförmigem profiliertem Kautschukmaterial von unterschiedlichen Seiten jeweils aus Richtung des ersten Umlenkkörpers (31) zu einem oder zu mehreren jeweils um einen rotatorisch antreibbaren Aufbaukörper zum Aufbau jeweils einer Reifenaufbauschicht auf dem Aufbaukörper ein erster zweiter drehbar gelagerter - insbesondere rotationssymetrischer - Umlenkkörper (32) in einer Position zum Zuführen und Andrücken von bandförmigem streifenförmigem profiliertem Kautschukmaterial von einer ersten Seite und ein zweiter zweiter drehbar gelagerter - insbesondere rotationssymetrischer - Umlenkkörper (42) in einer Position zum Zuführen und Andrücken von bandförmigem streifenförmigem profiliertem Kautschukmaterial von einer zweiten Seite drehbar gelagert ist, wobei das umlaufende Enlosband (5) um den ersten Umlenkkörper (31) und sowohl um den ersten zweiten Umlenkkörper (32) als auch um den zweiten zweiten Umlenkkörper (42) geführt ausgebildet ist.

7. Vorrichtung gemäß den Merkmalen von Anspruch 6,
wobei jeweils die Drehachse (38) des ersten zweiten Umlenkkörpers (32) und die Drehachse (48) des zweiten zweiten Umlenkkörpers (42) gegenüber der Drehachse des ersten Umlenkkörpers (37) gesteuert veränderbar ausgebildet ist.

8. Vorrichtung gemäß den Merkmalen von Anspruch 5,6 oder 7,
wobei das umlaufend geführte Endlosband (5) zwischen erster Umlenkrolle (31) und erster zweiter Umlenkrolle (32) und zwischen erster (31) und zweiter zweiter Umlenkrolle (42) ein oberes und ein unteres Trumm aufweist, wobei das obere Trumm als Fördertrumm zur Förderung des profilierten Kautschukmaterials - insbesondere zum ersten zweiten bzw. zum zweiten zweiten Umlenkkörper und - zum Aufbaukörper ausgebildet ist.

9. Vorrichtung gemäß den Merkmalen von einem oder mehreren der Ansprüche 5 bis 8,
mit einer steuerbaren Antriebseinheit und mit einer zumindest zur Förderung herstellbaren Antriebsverbindung zwischen Antriebseinheit und erstem Umlenkkörper (31) zum wahlweise gesteuerten Verdrehen des ersten Umlenkkörpers (31) um seine Drehachse (37) in beide Drehrichtungen zum Antreiben des umlaufenden Endlosbandes (5) um die Umlenkkörper (31,32,42) über Mitnahmekontakt zwischen erstem Umlenkkörper (31) und umlaufendem Endlosband (5).

10. Vorrichtung gemäß den Merkmalen von einem oder mehreren der vorangegangenen Ansprüche,
wobei die Ausformeinrichtung (6) im Gestell oberhalb der umlaufenden Tragefläche ausgebildet ist.

11. Vorrichtung gemäß den Merkmalen von einem oder mehreren der vorangegangenen Ansprüche,
wobei die Ausformeinrichtung (6) ein Formkalander ist.

12. Vorrichtung gemäß den Merkmalen von einem oder mehreren der vorangegangenen Ansprüche,
wobei der Ausformeinrichtung (6) in Förderrichtung vorgeordnet eine Herstellungseinrichtung -insbesondere eine Extrudereinrichtung (21) - zur Erzeugung von bandförmigem Kautschukmaterial vorgeordnet ist.

13. Vorrichtung gemäß den Merkmalen von einem oder mehreren der vorangegangenen Ansprüche,
wobei der Ausformeinrichtung (6) in Förderrichtung vorgeordnet eine steuerbare Ablängeinrichtung (9) zur gesteuerten Ablängung der zum Auflegen erforderlichen Band- oder Streifenlängen des Kautschukmaterials ausgebildet ist.

14. Vorrichtung gemäß den Merkmalen von einem oder mehreren der vorangegangenen Ansprüche,
mit Mitteln zum gesteuerten Heranführen - insbesondere durch Verschieben - der Vorrichtung (4) in eine Betriebsposition am Aufbaukörper und zum gesteuerten Entfernen - insbesondere durch Verschieben - der Vorrichtung (4) aus der Betriebsposition in eine Ruheposition entfernt vom Aufbaukörper.

## Claims

1. Apparatus (4) for supplying and pressing profiled rubber material in band or strip form to a building element which can be rotationally driven, for building up a tyre building layer on the building element,
- with a frame,
**characterized**
- **in that** a shaping device (6) for the profiling of rubber material conveyed through the shaping device (6) is arranged in the frame,
- **in that** an endlessly formed supporting surface, running around at least one axis of rotation, for transporting the shaped rubber material deposited on the supporting surface out of the frame, which surface extends in its circulatory direction out of the frame and into it again respectively on two opposite sides of the frame, is arranged downstream of the shaping device (6) in the conveying direction of the profiled rubber material,
- with a controllable drive connection for driving the circulating supporting surface in a controlled manner in one circulatory direction or the other, according to choice, about the axis of rotation.

2. Apparatus according to the features of Claim 1
- with in each case at least one portion in the path of circulation of the circulating supporting surface outside the frame in which the circulating supporting surface is supported perpendicularly in relation to the supporting surface for the introduction of force when transferring the rubber material to the building element to produce the required pressing pressure.

3. Apparatus according to the features of Claim 1 or 2,
- in which the endlessly formed supporting surface, running around at least one axis of rotation, for transporting the shaped rubber material deposited on the supporting surface out of the frame, which surface extends in its circulatory direction out of the frame and into it again respectively on two opposite sides of the frame, is formed mirror-invertedly in relation to a plane which comprises the axis of rotation, so that the part of the circulating supporting surface that is made to extend out of the frame and into it again on one side is the mirror image of the part of the circulating supporting surface that is made to extend out of the frame and into it again on the other side.

4. Apparatus according to the features of Claim 1, 2 or 3,
the supporting surface that runs around at least one axis of rotation being the lateral surface of a drum (45) mounted rotatably about an axis of rotation (46).

5. Apparatus according to the features of Claim 1, 2 or 3,
the supporting surface that runs around at least one axis of rotation being an endless belt (5) guided in a circulating manner around one or more deflecting elements (31, 32, 42) each mounted rotatably about an axis of rotation.

6. Apparatus according to the features of Claim 5,
with a first deflecting element (31) arranged downstream of the shaping device (6) in the conveying direction of the profiled rubber material and mounted rotatably about an axis of rotation (37) - in particular a rotationally symmetrical deflecting element (31) - wherein, for supplying and pressing profiled rubber material in band or strip form from different sides, according to choice, respectively from the direction of the first deflecting element (31) to one or more building elements which can be rotationally driven, for building up in each case a tyre building layer on the building element, a first second rotatably mounted - in particular rotationally symmetrical - deflecting element (32) is rotatably mounted in a position for supplying and pressing profiled rubber material in band or strip form from a first side, and a second second rotatably mounted - in particular rotationally symmetrical - deflecting element (42) is rotatably mounted in a position for supplying and pressing profiled rubber material in band or strip form from a second side, the circulating endless belt (5) being formed such that it is guided around the first deflecting element (31) and both around the first second deflecting element (32) and around the second second deflecting element (42).

7. Apparatus according to the features of Claim 6,
the axis of rotation (38) of the first second deflecting element (32) and the axis of rotation (48) of the second second deflecting element (42) in each case being formed such that it can be changed in a controlled manner with respect to the axis of rotation of the first deflecting element (37).

8. Apparatus according to the features of Claim 5, 6 or 7,
the endless belt (5) that is guided in a circulating manner having an upper strand and a lower strand between the first deflecting roller (31) and the first second deflecting roller (32) and between the first deflecting roller (31) and the second second deflecting roller (42), the upper strand being formed as a conveying strand for conveying the profiled rubber material - in particular to the first second deflecting element and to the second second deflecting element, respectively - and to the building element.

9. Apparatus according to the features of one or more of Claims 5 to 8,
with a controllable drive unit and with a drive connection, which can be established at least for conveying, between the drive unit and the first deflecting element (31), for turning the first deflecting element (31) about its axis of rotation (37) in a controlled manner in both directions of rotation, according to choice, for driving the circulating endless belt (5) around the deflecting elements (31, 32, 42) by means of driving contact between the first deflecting element (31) and the circulating endless belt (5).

10. Apparatus according to the features of one or more of the preceding claims,
the shaping device (6) being formed in the frame above the circulating supporting surface.

11. Apparatus according to the features of one or more of the preceding claims,
the shaping device (6) being a moulding calender.

12. Apparatus according to the features of one or more of the preceding claims,
the shaping device (6) being preceded in the conveying direction by a producing device - in particular an extruder device (21) - for producing rubber material in band form.

13. Apparatus according to the features of one or more of the preceding claims,
the shaping device (6) being preceded in the conveying direction by a controllable cutting-to-length device (9) for the controlled cutting to length of the band or strip lengths of the rubber material that are required for depositing.

14. Apparatus according to the features of one or more of the preceding claims,
with means for bringing the apparatus (4) in a controlled manner - in particular by displacement - into an operating position at the building element and for removing the apparatus (4) in a controlled manner - in particular by displacement - from the operating position into a rest position away from the building element.

## Revendications

1. Dispositif (4) pour acheminer et presser un matériau en caoutchouc profilé en forme de bande ou en forme de ruban vers un corps de construction pouvant être entraîné en rotation pour la construction d'une couche structurelle de pneumatique sur le corps de construction,
- comprenant un bâti,
**caractérisé en ce que**
- dans le bâti est disposé un dispositif de formation (6) pour profiler le matériau en caoutchouc transporté à travers le dispositif de formation (6),
- une surface porteuse sans fin tournant autour d'au moins un axe de rotation, pour le transport hors du bâti, du matériau en caoutchouc formé et déposé sur la surface de support, qui s'étend dans sa direction périphérique à chaque fois sur deux côtés opposés du bâti, hors du bâti et à nouveau dans celui-ci, est disposée en aval du dispositif de formation (6) dans la direction de transport du matériau en caoutchouc profilé,
- avec une connexion d'entraînement commandable pour l'entraînement commandé de manière sélective de la surface porteuse entraînée en rotation autour de l'axe de rotation, dans l'un ou l'autre sens de rotation.

2. Dispositif selon les caractéristiques de la revendication 1,
- comprenant à chaque fois au moins une portion dans la trajectoire périphérique de la surface porteuse en rotation autour du bâti, dans lequel la surface porteuse en rotation est supportée perpendiculairement à la surface porteuse en vue d'introduire une force lors du transfert du matériau en caoutchouc sur le corps de construction pour produire la pression d'application requise.

3. Dispositif selon les caractéristiques de la revendication 1 ou 2,
- dans lequel la surface porteuse sans fin en rotation autour d'au moins un axe de rotation pour le transport, hors du bâti, du matériau en caoutchouc formé et déposé sur la surface porteuse, qui s'étend dans sa direction périphérique à chaque fois sur deux côtés opposés du bâti, hors du bâti et à nouveau dans celui-ci, est réalisée avec une symétrie spéculaire par rapport à un plan qui présente l'axe de rotation, de sorte que la partie de la surface porteuse périphérique qui s'étend d'un côté hors du bâti et à nouveau dans celui-ci forme l'image spéculaire de la partie de la surface porteuse en rotation s'étendant de l'autre côté hors du bâti et à nouveau dans celui-ci.

4. Dispositif selon les caractéristiques de la revendication 1, 2 ou 3, dans lequel la surface porteuse en rotation autour d'au moins un axe de rotation est la surface d'enveloppe d'un tambour (45) monté à rotation autour d'un axe de rotation (46).

5. Dispositif selon les caractéristiques des revendications 1, 2 ou 3, dans lequel la surface porteuse périphérique autour d'au moins un axe de rotation est une bande sans fin (5) guidée en rotation autour d'un ou de plusieurs corps de déflexion (31, 32, 42) montés de manière rotative autour d'un axe de rotation respectif.

6. Dispositif selon les caractéristiques de la revendication 5,
comprenant un premier corps de déflexion (31) disposé en aval du dispositif de formation (6) dans la direction de transport du matériau en caoutchouc profilé, monté à rotation - notamment à symétrie de révolution - autour d'un axe de rotation (37), dans lequel, pour l'acheminement sélectif et la pression du matériau en caoutchouc profilé en forme de bande ou de ruban depuis différents côtés à chaque fois depuis la direction du premier corps de déflexion (31) vers un ou plusieurs corps de construction pouvant être entraînés en rotation, pour la construction d'une couche structurelle respective de pneumatique sur le corps de construction, un premier deuxième corps de déflexion (32) monté à rotation - en particulier à symétrie de révolution - est monté de manière à pouvoir tourner dans une position pour l'acheminement et la pression de matériau en caoutchouc profilé en forme de bande ou en forme de ruban depuis un premier côté, et un deuxième deuxième corps de déflexion (42) monté à rotation
- en particulier à symétrie de révolution - est monté de manière à pouvoir tourner dans une position pour l'acheminement et la pression de matériau en caoutchouc profilé en forme de bande ou en forme de ruban depuis un deuxième côté, la bande sans fin en rotation (5) étant guidée autour du premier corps de déflexion (31) et aussi autour du premier deuxième corps de déflexion (32) ainsi qu'autour du deuxième deuxième corps de déflexion (42).

7. Dispositif selon les caractéristiques de la revendication 6,
dans lequel à chaque fois l'axe de rotation (38) du premier deuxième corps de déflexion (32) et l'axe de rotation (48) du deuxième deuxième corps de déflexion (42) peut être modifié de manière commandée par rapport à l'axe de rotation du premier corps de déflexion (31).

8. Dispositif selon les caractéristiques de la revendication 5, 6 ou 7,
dans lequel la bande sans fin (5) guidée à rotation entre une première poulie de renvoi (31) et une première deuxième poulie de renvoi (32), et entre une première (31) et une deuxième deuxième poulie de renvoi (42), présente un tronçon supérieur et un tronçon inférieur, le tronçon supérieur étant réalisé en tant que tronçon de transport pour transporter le matériau en caoutchouc profilé - en particulier vers le premier deuxième ou le deuxième deuxième corps de déflexion et vers le corps de construction.

9. Dispositif selon les caractéristiques de l'une ou de plusieurs des revendications 5 à 8,
comprenant une unité d'entraînement commandable et une connexion d'entraînement pouvant être fabriquée au moins pour le transport entre l'unité d'entraînement et le premier corps de déflexion (31) pour la rotation commandée de manière sélective du premier corps de déflexion (31) autour de son axe de rotation (37) dans les deux sens de rotation pour l'entraînement de la bande sans fin en rotation (5) autour des corps de déflexion (31, 32, 42), par le biais d'un contact d'entraînement entre le premier corps de déflexion (31) et la bande sans fin en rotation (5).

10. Dispositif selon les caractéristiques de l'une quelconque ou plusieurs des revendications précédentes, dans lequel le dispositif de formation (6) est réalisé dans le bâti au-dessus de la surface porteuse périphérique.

11. Dispositif selon les caractéristiques de l'une quelconque ou plusieurs des revendications précédentes, dans lequel le dispositif de formation (6) est une calandre de formage.

12. Dispositif selon les caractéristiques de l'une quelconque ou plusieurs des revendications précédentes, dans lequel on dispose, en aval du dispositif de formation (6), dans la direction de transport, un dispositif de fabrication - en particulier un dispositif d'extrusion (21) - pour produire un matériau en caoutchouc en forme de bande.

13. Dispositif selon les caractéristiques de l'une quelconque ou plusieurs des revendications précédentes, dans lequel on dispose, en aval du dispositif de formation (6), dans la direction de transport, un dispositif commandable de découpe à la longueur voulue (9) pour le découpage commandé de longueurs de bande ou de ruban de matériau en caoutchouc nécessaires pour la pose.

14. Dispositif selon les caractéristiques de l'une quelconque ou plusieurs des revendications précédentes, comprenant des moyens pour rapprocher de manière commandée - en particulier par coulissement - le dispositif (4) dans une position fonctionnelle sur le corps de construction et pour l'enlèvement commandé - en particulier par coulissement - du dispositif (4) hors de la position fonctionnelle dans une position de repos à l'écart du corps de construction.
